(19) Europäisches Patentamt
European Patent Office
Office européen des brevets

(11) **EP 2 770 176 A1**

(12) **DEMANDE DE BREVET EUROPEEN**

(43) Date de publication:
**27.08.2014 Bulletin 2014/35**

(51) Int Cl.:
*F01N 3/021* (2006.01)      *F01N 9/00* (2006.01)
*F01N 11/00* (2006.01)

(21) Numéro de dépôt: **14153371.1**

(22) Date de dépôt: **31.01.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **25.02.2013  FR 1351615**

(71) Demandeur: **PEUGEOT CITROËN AUTOMOBILES
SA**
**78140 Velizy-Villacoublay (FR)**

(72) Inventeur: **Faure, Sebastien**
**92500 RUEIL MALMAISON (FR)**

(54) **Procédé de diagnostic de cohérence de comportement d'un filtre à particules et calculateur moteur correspondant**

(57)    L'invention porte principalement sur un procédé de diagnostic de cohérence de comportement d'un filtre à particules de véhicule automobile. Conformément à l'invention ce procédé comporte les étapes suivantes :
- déterminer, sur une distance de surveillance (X), une première information (Info_A) relative à une évolution d'un critère de fonctionnement (Crit_DP) du filtre à particules représentatif d'un niveau d'encrassement dudit filtre à particules,
- déterminer une deuxième information (Info_B) relative à une déclaration de changement du filtre à particules sur ladite distance de surveillance (X),
- établir un diagnostic (N) de cohérence de comportement du filtre à particules à partir d'une corrélation entre la première information (Info_A) relative à l'évolution du critère de fonctionnement et la deuxième information (Info_B) relative à la déclaration de changement du filtre à particules sur la distance de surveillance (X), et
- déclencher (4) au moins une action en cas d'incohérence de comportement détectée lors de l'établissement du diagnostic.

Fig. 1

EP 2 770 176 A1

**Description**

L'invention porte sur un procédé de diagnostic de cohérence de comportement d'un filtre à particules en cas de changement dudit filtre à particules, ainsi que sur le calculateur moteur correspondant.

L'invention trouve une application particulièrement avantageuse avec tous les véhicules équipés d'un filtre à particules, en particulier les véhicules de type diesel mais aussi certains véhicules de type essence ou hybride.

Les gaz d'échappement des moteurs thermiques comportent habituellement des éléments polluants et notamment des particules qui sont rejetées dans l'atmosphère. Afin de supprimer ces rejets, des filtres sont placés dans la ligne d'échappement des gaz pour bloquer les particules. Ces filtres à particules (FAP) sont généralement des cylindres en céramique composés d'une multitude de canaux de faibles diamètres (de l'ordre de la dizaine de microns). Les particules sont piégées dans ces canaux sous forme de suies ce qui a pour effet d'encrasser progressivement le filtre. Il est donc nécessaire de régénérer le filtre périodiquement.

A cette fin, le filtre est chauffé afin de brûler les particules piégées. Une technique de régénération consiste à chauffer le filtre à l'aide des gaz d'échappement en élevant la température de ces gaz. Classiquement, le surplus d'énergie à l'échappement nécessaire à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement.

Il convient de procéder au remplacement du filtre à particules lorsque ce dernier engendre des régénérations trop fréquentes pour maintenir un niveau correct de dilution dans l'huile moteur, ou ne filtre plus de manière suffisamment efficace les particules polluantes en raison d'un encrassement non combustible trop important.

Le moment où le filtre à particules doit être changé est généralement déterminé à l'aide d'un critère de vieillissement ou plus simplement d'un critère kilométrique. Le calculateur émet alors une information alertant le réparateur que le filtre à particules doit être changé. Après en avoir effectué le remplacement, le réparateur effectue une déclaration du changement du filtre à particules au moyen d'un outil après-vente se connectant sur le calculateur moteur via une prise de diagnostic à cet effet. Les grandeurs de vieillissement telles que le modèle d'endommagement ou le modèle d'encrassement sont alors réinitialisées à leurs valeurs d'origine.

Le changement du filtre à particules n'est donc pas détecté automatiquement dans la mesure où il résulte d'une action volontaire de la part du réparateur. Il est donc associé à une notion de respect des procédures de services après-vente. La déclaration d'un changement du filtre à particules qui n'aurait en réalité pas été effectué ou l'oubli d'un renseignement de changement de filtre à particules ne sont donc pas vérifiés a posteriori.

Or, le fait de déclarer (par malveillance ou non) un changement du filtre à particules alors que ce dernier n'a pas été réellement effectué est problématique. En effet, dans ce cas, le calculateur va gérer les régénérations du filtre comme si ce dernier était neuf alors que celui-ci est déjà encrassé, ce qui pourra entraîner un risque de surcharge ou d'échauffement aggravé du filtre à particules.

Le contraire (ne pas déclarer au calculateur le changement du filtre à particules) est certes moins gênant mais il est dommage de contraindre de manière excessive un filtre à particules neuf en le gérant comme s'il était usagé. Le risque est notamment d'activer un mode de protection trop tôt ou de renouveler le filtre à particules à tort. Ce cas de figure se rencontre généralement lors d'un changement du filtre effectué hors garage par des réparateurs non professionnels ne disposant pas du matériel de diagnostic pour réinitialiser les grandeurs de vieillissement du filtre à particules.

L'invention vise à remédier à ces inconvénients en proposant un procédé de diagnostic de cohérence de comportement d'un filtre à particules de véhicule automobile, caractérisé en ce qu'il comporte les étapes suivantes :

- déterminer, sur une distance de surveillance, une première information relative à une évolution d'un critère de fonctionnement du filtre à particules représentatif d'un niveau d'encrassement dudit filtre à particules,

- déterminer une deuxième information relative à une déclaration de changement du filtre à particules sur ladite distance de surveillance,

- établir un diagnostic de cohérence de comportement du filtre à particules à partir d'une corrélation entre la première information relative à l'évolution du critère de fonctionnement et la deuxième information relative à la déclaration de changement du filtre à particules sur la distance de surveillance, et

- déclencher au moins une action en cas d'incohérence de comportement détectée lors de l'établissement du diagnostic.

L'invention permet ainsi, via la corrélation entre l'information relative à l'évolution du critère de fonctionnement du filtre à particules et l'information relative à la déclaration d'un changement du filtre à particules, de confirmer un changement du filtre de manière automatique, mais également de diagnostiquer un oubli de déclaration d'un changement du filtre à particules ou une fausse déclaration de changement si une évolution attendue du critère de fonctionnement n'est pas observée.

Selon une mise en oeuvre, le critère de fonctionnement du filtre à particules est la pression différentielle du filtre à particules mesurée au cours d'une régénération.

Selon une mise en oeuvre, pour déterminer l'information relative à l'évolution du critère de de fonctionnement, le procédé comporte l'étape de déterminer un taux d'accroissement de la pression différentielle sur la distance de surveillance et de comparer ce taux d'accroissement avec au moins un seuil pour obtenir une information booléenne.

Selon une mise en oeuvre, le taux d'accroissement est comparé avec un seuil unique valant 0.

Selon une mise en oeuvre, pour déterminer l'information relative à une déclaration de changement du filtre à particules sur la distance de surveillance, le procédé comporte l'étape de calculer une distance parcourue par le véhicule depuis une déclaration de changement du filtre à particules et de comparer cette distance avec un premier seuil correspondant à un début de la distance de surveillance et un deuxième seuil correspondant à une fin de la distance de surveillance pour obtenir une information booléenne.

Selon une mise en oeuvre, l'établissement du diagnostic est établi à partir d'une corrélation entre la première et de la deuxième information de type booléenne.

Selon une mise en oeuvre, des cas d'incohérence détectés correspondent à :

- un premier cas dans lequel l'information relative à l'évolution du critère de fonctionnement du filtre à particules indique qu'un niveau d'encrassement a diminué sur la distance de surveillance alors que l'information relative à une déclaration du changement du filtre à particules indique qu'aucune déclaration de changement du filtre à particules a été effectuée, et

- un deuxième cas dans lequel l'information relative à l'évolution du critère de fonctionnement du filtre à particules indique qu'un niveau d'encrassement a augmenté sur la distance de surveillance alors que l'information relative à une déclaration du changement du filtre à particules indique qu'une déclaration de changement du filtre à particules a été effectuée.

Selon une mise en oeuvre, la ou les actions déclenchées en cas d'incohérence de fonctionnement consistent notamment en :

- une émission d'un signal sonore et/ou visuel indiquant qu'une incohérence du comportement du filtre à particules a été détectée, et/ou

- une reconfiguration d'une stratégie de contrôle du filtre à particules en fonction de l'incohérence de fonctionnement détectée.

Selon une mise en oeuvre, la distance de surveillance est comprise environ entre 1000 et 3000 kilomètres.

L'invention a également pour objet un calculateur moteur de véhicule automobile comportant une mémoire stockant des instructions logicielles pour assurer la mise en oeuvre du procédé selon l'invention.

L'invention sera mieux comprise à la lecture de la description qui suit et à l'examen des figures qui l'accompagnent. Ces figures ne sont données qu'à titre illustratif mais nullement limitatif de l'invention.

La figure 1 montre une représentation schématique fonctionnelle des blocs du calculateur moteur mettant en oeuvre le procédé selon l'invention.

La figure 2 est un tableau des différents états de la variable de diagnostic en fonction des valeurs de l'information relative à l'évolution du critère de fonctionnement et de l'information relative à la déclaration d'un changement du filtre à particules.

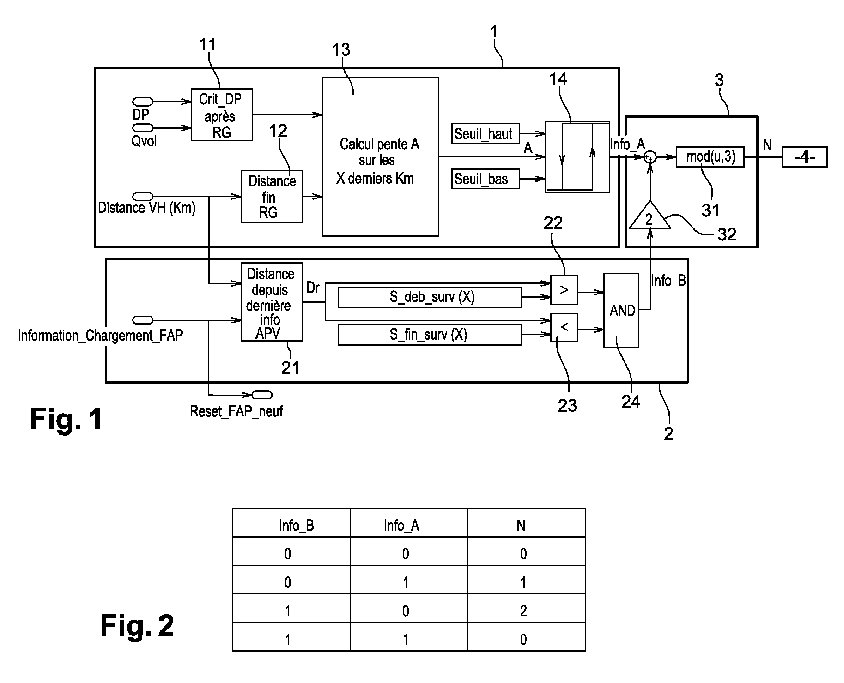

Comme cela est visible sur la figure 1 qui montre une représentation schématique fonctionnelle des blocs 1-4 du calculateur moteur mettant en oeuvre le procédé selon l'invention, un premier bloc 1 permet de déterminer une information relative à une évolution d'un critère de fonctionnement du filtre à particules sur une distance de surveillance X. Ce critère de fonctionnement est représentatif d'un niveau d'encrassement du filtre à particules.

Le critère de fonctionnement Crit_DP est par exemple un critère relatif à une pression régnant dans le filtre après une régénération issu du module 11. On pourra ainsi utiliser indifféremment la pression différentielle mesurée à un régime situé à un point de fonctionnement (filtrée et/ou moyennée), ou la pression différentielle mesurée à une vitesse et à un rapport de boîte de vitesses donné (filtrée et/ou moyennée), ou encore un critère de fonctionnement correspondant à un rapport entre la pression différentielle et un débit volumique du filtre Qvol mesuré calculé sur une plage de débit volumique limitée.

Pour mesurer la pression différentielle, on pourra faire appel à un capteur de pression différentielle mesurant la pression en amont et en aval du filtre à particules ou alors un capteur de pression simple mesurant uniquement la pression en amont du filtre. Dans ce cas, la pression en aval du filtre à particules est déterminée par un modèle de calcul prenant notamment comme paramètre la pression en amont du filtre à particules.

La pression différentielle est mesurée de préférence après une régénération RG complète. Une régénération est considérée comme complète lorsque son efficacité atteint environ 90% en sorte qu'il ne reste que quelques grammes de suies (moins de deux grammes) dans le filtre à particules. Cette mesure à 90% de la régénération correspond ainsi à un état de chargement en suies sensiblement répétable et son évolution est représentative de l'état d'encrassement non combustible du filtre. En effet, plus le niveau d'encrassement du filtre à particules augmente, plus le critère de fonctionnement Crit_DP aura tendance à augmenter pour un même état de chargement du filtre à particules.

Le module 12 mémorise par ailleurs la distance du véhicule à la fin de chaque régénération complète Dist_fin_RG.

Le module 13 calcule alors la régression linéaire suivante à partir de la pression différentielle à la fin d'une régénération complète Crit_DP fournie par le module 11 et la distance du véhicule correspondante Dist_fin_RG fournie par le module 12 :

Crit_DP=A.Dist_fin_RG+B

Le module 13 en déduit alors le taux d'accroissement A en mettant en oeuvre la formule suivante :

$$A = \frac{n \cdot \sum \left( Dist_{fin_{RG_i}} \cdot Crit_{DP_i} \right) - \left( \sum Dist_{fin_{RG_i}} \right) \cdot \left( \sum Crit_{DP_i} \right)}{n \cdot \sum Dist_{fin_{RG_i}}^{2} - \left( \sum Dist_{fin_{RG_i}} \right)^{2}}$$

La régression linéaire est réalisée sur un nombre n suffisant de régénérations d'indice i sur la distance de surveillance X. Ce nombre n de régénération est compris par exemple entre 5 et 10, ce qui correspond à une distance X comprise sensiblement entre 1000km et 3000km selon les profils de roulage du conducteur.

On note que la distance de surveillance X est définie par la différence entre un seuil correspondant à la fin de la distance de surveillance (S_fin_surv) et un seuil correspondant à un début de la distance de surveillance (S_deb_surv) : X=S_fin_surv-S_deb_surv.

L'information Info_A relative à l'évolution du critère fonctionnelle, qui est de préférence une valeur booléenne, est déterminée par le module 14 en comparant le taux d'accroissement A précédemment calculé avec au moins un seuil.

Dans le cas où on fait appel à deux seuils correspondant à une fonction hystérésis, on a :

Info_A = 0 si A est supérieur ou égal à un premier seuil S_bas, ou

Info_A=1 si A est inférieur à un deuxième seuil S_haut supérieur au seuil S_bas.

Alternativement, les deux seuils étant égaux à un seuil unique Su, on a :

Info_A = 0 si A est supérieur ou égal au seuil Su ou

Info_A = 1 si A est inférieur au Seuil Su.

De préférence, le seuil Su vaut 0. En effet, au fur et à mesure du vieillissement et donc de l'encrassement du filtre à particules, le taux d'accroissement A est supérieur à 0 et donc Info_A=0. Tandis que lorsque le filtre à particules sera réellement changé, le taux d'accroissement A va chuter lorsque le filtre va retrouver son comportement d'origine et la régression linéaire va s'adapter en présentant localement un taux d'accroissement A inférieur à 0 sur la distance de surveillance X en sorte qu'on aura Info_A=1.

Un bloc 2 assure une surveillance du changement filtre à particules en produisant une information Info_B relative à une déclaration de changement du filtre à particules sur la distance de surveillance X.

Cette Info_B est basée sur le calcul d'une distance Dr parcoure par le véhicule depuis la déclaration de changement du filtre à particules effectuée par l'outil diagnostic au calculateur moteur. A cet effet, dès qu'une déclaration de changement du filtre à particules est effectuée via un changement d'état de la donnée Info_changement_FAP, on incrémente un compteur 21 lequel est remis à 0 à chaque nouvelle déclaration de changement de filtre à particules. La valeur du compteur 21 vaut 0 tant qu'une déclaration de changement du filtre à particules n'a pas été effectuée.

La distance Dr issue du compteur 21 est comparée avec le seuil correspondant au début de la distance de surveillance S_deb_surv et le seuil correspondant à la fin de la distance de surveillance S_fin_surv en sorte que :

Info_B= 1 si S_deb_surv<Dr<S_fin_surv, ou

Info_B = 0 sinon.

S_deb_surv et S_fin_surv pourront par exemple valoir respectivement 10km et 2000km ou toutes autres valeurs adaptées pour que la distance X reste dans la plage de valeurs précitée.

Cette comparaison est en l'occurrence effectuée à l'aide des modules de comparaison 22 et 23 et de la porte logique 24 qui prend un état de valeur 1 lorsque les deux comparaisons de la distance Dr avec les seuils précités sont vérifiées par les modules 22 et 23 ou alors un état valant 0 dans le cas contraire.

Le bloc 3 établit alors un diagnostic de cohérence de fonctionnement du filtre à particules à partir des informations Info_A et Info_B.

A cet effet, un module 31 calcule une variable de diagnostic N suivant la formule suivante N = 2 x Info_B + Info_A (modulo 3), le module 32 appliquant un gain de valeur 2 à l'information Info_B. Les différents valeurs de N correspondant aux différents cas pouvant être rencontrés sont indiqués dans le tableau de la figure 2. On note ainsi que N vaut 0 lorsqu'aucune incohérence de comportement n'est détectée sur la distance de surveillance X. En revanche, N prend une valeur différente de 0 (1 ou 2) lorsqu'une incohérence de comportement est détectée sur la distance X.

La valeur de N est appliquée en entrée d'un bloc 4 de gestionnaire de diagnostics apte à déclencher au moins une action en cas d'incohérence du comportement du filtre à particules détectée par le bloc 3 de diagnostic. Cette action pourra consister notamment en l'émission d'un signal d'alerte et/ou une reconfiguration d'une stratégie de contrôle du filtre à particules en fonction de l'incohérence détectée.

Plus précisément, dans le premier cas correspondant à N=0, le taux d'accroissement A de la pression différentielle est positif (Info_A=0) alors qu'aucune déclaration de changement du filtre à particules ne parvient au calculateur moteur (Info_B = 0) sur la distance X de surveillance. En conséquence, le module 4 en déduit que le comportement du filtre à particules est cohérent et qu'il n'y a aucune action particulière à déclencher.

Dans le deuxième cas correspondant à N=0, le taux d'accroissement A de la pression différentielle est négatif (Info_A= 1) alors qu'une déclaration d'un changement du filtre à particules a été effectuée sur la période de surveillance (Info_B = 1). Le bloc 4 de reconfiguration en déduit que la déclaration de changement du filtre à particules est correcte et qu'il n'y a aucune action particulière à déclencher.

En revanche, les deux autres cas (N=1 ou N=2) sont problématiques et vont nécessiter le déclenchement d'actions d'alerte et/ou de reconfiguration de la stratégie de contrôle du filtre à particules.

En effet, dans le cas où N = 1, le filtre à particules a été changé dans la mesure où le taux d'accroissement A de la pression différentielle a chuté sur la distance de surveillance (Info_A = 1) mais il n'y a pas eu de déclaration de changement dudit filtre (Info_B = 0). Ce cas de figure est généralement dû à un oubli de la part du réparateur professionnel ou à un remplacement du filtre à particules par un non professionnel ne disposant pas des outils de diagnostic adéquats.

Certaines stratégies de contrôle moteur peuvent alors se retrouver décalées par rapport au niveau d'encrassement réel du filtre à particules, notamment l'estimateur de chargements en suies via l'information de pression différentielle. La distance entre deux régénérations successives va également continuer à diminuer, ce qui va engendrer des problèmes de dilution dans l'huile moteur. Par ailleurs, si le véhicule embarque une stratégie d'estimation de l'endommagement, il sera possible d'estimer que le filtre à particules est fissuré alors que ce dernier vient d'être changé, ce qui conduit à une gestion non optimale du filtre à particules.

Le bloc 4 pourra alors déclencher au moins une action parmi les suivantes :

- Emettre un signal sonore et/ou visuel (allumer un voyant ou afficher un message sur un écran multifonctions du véhicule par exemple) indiquant qu'une incohérence de comportement du filtre à particules a été détecté. Cela incitera ainsi à réaliser une inspection plus précise du filtre à particules lors de la prochaine intervention sur le véhicule, et/ou

- Reconfigurer la stratégie de contrôle du filtre à particules en forçant l'initialisation à des valeurs correspondant à un filtre neuf (encrassement à 0%, endommagement à 0 etc...) afin d'exploiter de manière optimale le nouveau filtre à particules et en particulier rallonger des distances entre les régénérations. Alternativement, on configure des valeurs intermédiaires entre celles correspondantes à un filtre neuf et les valeurs courantes de manière à prévenir une éventuelle défaillance de fonctionnement du présent procédé.

Par ailleurs, dans le cas où N=2, une déclaration de changement du filtre à particules a été effectuée (Info_B = 1), ce qui a eu pour effet de réinitialiser les valeurs de gestion du filtre à particules. Toutefois, le taux d'accroissement de la pression différentielles ne devient pas négatif (Info_A reste à 0 sur la distance de surveillance). Cela signifie qu'il n'y a pas eu changement du filtre à particules en réalité et qu'une déclaration erronée de changement du filtre à particules a été effectuée. Il existe alors un risque de surcharge du filtre à particules ou d'échauffement aggravé.

Le bloc 4 pourra alors déclencher au moins une action parmi les suivantes :

- Emettre comme précédemment un signal sonore et/ou visuel (allumer un voyant ou afficher un message sur l'écran multifonction du véhicule) indiquant qu'une incohérence du comportement du filtre à particules a été détecté, et/ou

- Reconfigurer la stratégie de contrôle du filtre à particules en remettant les valeurs avant réinitialisation. A cette fin, une sauvegarde préalable de celles-ci dans une mémoire du calculateur moteur aura été réalisée.

Cette mémoire ou une autre mémoire du calculateur moteur stocke en outre des instructions logicielles correspondant aux fonctions réalisées par les différents blocs 1 à 4.

L'homme du métier pourra bien entendu modifier le procédé précédemment décrit sans sortir du cadre de l'invention. L'élaboration de l'information Info_A n'est en effet pas basée nécessairement sur le calcul du taux d'accroissement A du différentiel de pression en fonction du kilométrage du véhicule, dans le cas où le filtre à particules est surveillé par d'autres capteurs que des capteurs de mesure de pression, comme par exemple un capteur à ultrasons ou des capteurs à particules situés en amont et/ou en aval du filtre à particules.

Alternativement, il serait également possible de ne pas déclarer le changement du filtre à particules via l'outil diagnostic et ne procéder qu'à l'échange physique du filtre à particules. Dans ce cas, la stratégie de contrôle du filtre à particules est mise à jour via le bloc 1 uniquement. On limite ainsi les erreurs de réparations en garage tout en permettant à l'utilisateur de changer le filtre à particules lui-même sans crainte de ne pas pouvoir le déclarer au calculateur moteur en l'absence d'équipement de diagnostic adéquat.

On note également que les états (0 ou 1) des différentes variables ne sont donnés qu'à titre indicatif et pourront être inversés dans d'autres mises en oeuvre du procédé précédemment décrit.

**Revendications**

1. Procédé de diagnostic de cohérence de comportement d'un filtre à particules de véhicule automobile, **caractérisé en ce qu'**il comporte les étapes suivantes :

   - déterminer, sur une distance de surveillance (X), une première information (Info_A) relative à une évolution d'un critère de fonctionnement (Crit_DP) du filtre à particules représentatif d'un niveau d'encrassement dudit filtre à particules,
   - déterminer une deuxième information (Info_B) relative à une déclaration de changement du filtre à particules sur ladite distance de surveillance (X),
   - établir un diagnostic (N) de cohérence de comportement du filtre à particules à partir d'une corrélation entre la première information (Info_A)relative à l'évolution du critère de fonctionnement et la deuxième information (Info_B) relative à la déclaration de changement du filtre à particules sur la distance de surveillance (X), et
   - déclencher (4) au moins une action en cas d'incohérence de comportement détectée lors de l'établissement du diagnostic.

2. Procédé selon la revendication 1, **caractérisé en ce que** le critère de fonctionnement (Crit_DP) du filtre à particules est la pression différentielle du filtre à particules mesurée au cours d'une régénération.

3. Procédé selon la revendication 2, **caractérisé en ce que** pour déterminer l'information (Info_A) relative à l'évolution du critère de de fonctionnement, il comporte l'étape de déterminer un taux d'accroissement (A) de la pression différentielle sur la distance de surveillance (X) et de comparer ce taux d'accroissement (A) avec au moins un seuil (S_bas, S_haut, Su) pour obtenir une information booléenne.

4. Procédé selon la revendication 3, **caractérisé en ce que** le taux d'accroissement (A) est comparé avec un seuil unique valant 0.

5. Procédé selon l'une des revendications 1 à 4, caractérisé en ce pour déterminer l'information (Info_B) relative à une déclaration de changement du filtre à particules sur la distance de surveillance (X), il comporte l'étape de calculer une distance (Dr) parcourue par le véhicule depuis une déclaration de changement du filtre à particules et de comparer cette distance (Dr) avec un premier seuil (S_deb_surv) correspondant à un début de la distance de surveillance et un deuxième seuil (S_fin_surv) correspondant à une fin de la distance de surveillance pour obtenir une information booléenne.

6. Procédé selon les revendications 3 et 5, **caractérisé en ce que** l'établissement du diagnostic est établi à partir d'une corrélation entre la première (Info_A)et de la deuxième (Info_B) informations de type booléenne.

7. Procédé selon l'une des revendications 1 à 6, **caractérisé en ce que** des cas d'incohérence détectés correspondent à :

- un premier cas dans lequel l'information (Info_A)relative à l'évolution du critère de fonctionnement (Crit_DP) du filtre à particules indique qu'un niveau d'encrassement a diminué sur la distance de surveillance (X) alors que l'information (Info_B) relative à une déclaration du changement du filtre à particules indique qu'aucune déclaration de changement du filtre à particules a été effectuée, et
- un deuxième cas dans lequel l'information (Info_A)relative à l'évolution du critère de fonctionnement (Crit_DP) du filtre à particules indique qu'un niveau d'encrassement a augmenté sur la distance de surveillance (X) alors que l'information relative à une déclaration du changement du filtre à particules indique qu'une déclaration de changement du filtre à particules a été effectuée.

8. Procédé selon l'une des revendications 1 à 7, **caractérisé en ce que** la ou les actions déclenchées en cas d'incohérence de fonctionnement consistent notamment en :

- une émission d'un signal sonore et/ou visuel indiquant qu'une incohérence du comportement du filtre à particules a été détectée, et/ou
- une reconfiguration d'une stratégie de contrôle du filtre à particules en fonction de l'incohérence de fonctionnement détectée.

9. Procédé selon l'une des revendications 1 à 8, **caractérisé en ce que** la distance de surveillance (X) est comprise environ entre 1000 et 3000 kilomètres.

10. Calculateur moteur de véhicule automobile comportant une mémoire stockant des instructions logicielles pour assurer la mise en oeuvre du procédé selon l'une des revendications précédentes.

EP 2 770 176 A1

## Fig. 1

## Fig. 2

| Info_B | Info_A | N |
|--------|--------|---|
| 0 | 0 | 0 |
| 0 | 1 | 1 |
| 1 | 0 | 2 |
| 1 | 1 | 0 |

**Europäisches Patentamt**

**European Patent Office**

**Office européen des brevets**

**RAPPORT DE RECHERCHE EUROPEENNE**

Numéro de la demande

EP 14 15 3371

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2011/307160 A1 (VERDEGAN BARRY M [US] ET AL) 15 décembre 2011 (2011-12-15) * le document en entier * ----- | 1-10 | INV. F01N3/021 F01N9/00 F01N11/00 |
| A | FR 2 903 142 A1 (BOSCH GMBH ROBERT [DE]) 4 janvier 2008 (2008-01-04) * le document en entier * ----- | 1-10 | |
| A | FR 2 872 853 A1 (BOSCH GMBH ROBERT [DE]) 13 janvier 2006 (2006-01-13) * le document en entier * ----- | 1-10 | |

DOMAINES TECHNIQUES RECHERCHES (IPC)

F01N

Le présent rapport a été établi pour toutes les revendications

| Lieu de la recherche | Date d'achèvement de la recherche | Examinateur |
|---|---|---|
| Munich | 12 mars 2014 | Wagner, A |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 3371

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2014

| Document brevet cité au rapport de recherche | | Date de publication | Membre(s) de la famille de brevet(s) | | Date de publication |
|---|---|---|---|---|---|
| US 2011307160 | A1 | 15-12-2011 | DE 112011101982 | T5 | 13-06-2013 |
| | | | US 2011307160 | A1 | 15-12-2011 |
| | | | WO 2011156609 | A2 | 15-12-2011 |
| FR 2903142 | A1 | 04-01-2008 | DE 102006029990 | A1 | 03-01-2008 |
| | | | FR 2903142 | A1 | 04-01-2008 |
| | | | JP 2008008296 | A | 17-01-2008 |
| | | | US 2008000218 | A1 | 03-01-2008 |
| FR 2872853 | A1 | 13-01-2006 | DE 102004033412 | A1 | 02-02-2006 |
| | | | FR 2872853 | A1 | 13-01-2006 |
| | | | JP 2006029326 | A | 02-02-2006 |
| | | | US 2006005534 | A1 | 12-01-2006 |

EPO FORM P0460

Pour tout renseignement concernant cette annexe : voir Journal Officiel de l'Office européen des brevets, No.12/82